# EUROPEAN PATENT APPLICATION

(11) **EP 2 890 106 A1**
(43) Date of publication of application: **01.07.2015**
(21) Application number: 14198717.2
(22) Date of filing: 18.12.2014
(51) Int. Cl.: H04N 1/393, G06K 15/02

(54) **Image processing apparatus, image forming apparatus, image generating method, and medium reducing appearance of disconnected thin lines**

(30) Priority: 24.12.2013 JP 2013264782
(71) Applicant: Konica Minolta, Inc., Tokyo 100-7015 (JP)
(72) Inventor: Genda, Daisuke, Tokyo, 100-7015 (JP)
(74) Representative: Gille Hrabal

(57) **Abstract**

An image processing apparatus includes: an image generating section to generate an image having a gradation value for each pixel by a rasterizing process; and a position correcting section to correct a position of a certain region of the image on a pixel basis. The image generating section generates the image including a line image by the rasterizing process, so that a line width of the line image is adjusted to be equal to or more than twice a minimum line width which can be generated by the rasterizing process, thereby reducing appearance of disconnected thin lines.

## Description

### BACKGROUND OF THE INVENTION

### Field of the Invention

The present invention relates to an image processing apparatus, image forming apparatus, image generating method, and medium.

### Description of Related Art

There is sometimes a case where a sheet subjected to a fixing process shrinks in an image forming apparatus and thereby positional deviation of images formed on both sheet sides occurs. These is also a case where images tilt due to distortion of optical systems, and thereby positional deviation of images occurs, the positional deviation being referred to as skew, bow, etc.

To correct such positional deviation, position correction by adding/removing pixel or pixels to/from an image (for example, see Japanese Patent Application Laid-open No. 2001-5245), or position correction by shifting a certain region(s) of an image on a pixel basis is performed.

When position correction is performed to an image including a line image(s) of a small line width, a width of one(1) pixel for example, such line image is sometimes broken, and accordingly reproducibility of the line image lowers.

There has been conventionally known a method for converting a low resolution image into a high resolution image in order to prevent the line image from being broken due to its thinness (for example, see Japanese Patent Application Laid-open No. 2009-211376). The line image can be prevented from being broken, by creating an image having higher resolution than usual with a method like the above and then performing position correction, or by creating an image, converting the image into the one having higher resolution, performing a smoothing process so that the line width becomes thicker, and then performing position correction.

However, the above method needs processing such as resolution conversion in order to prevent the line image from being broken, which increases data quantity of the image to be processed with high resolution. When the processing steps increase, and/or when operation resources and large-capacity memory resources become necessary, the costs increase.

### SUMMARY OF THE INVENTION

An object of the present invention is to easily improve reproducibility of line images.

In order to achieve the above object, according to a first aspect of preferred embodiments of the present invention, there is provided an image processing apparatus including: an image generating section to generate an image having a gradation value for each pixel by a rasterizing process; and a position correcting section to correct a position of a certain region of the image on a pixel basis, wherein the image generating section generates the image including a line image by the rasterizing process, so that a line width of the line image is adjusted to be equal to or more than twice a minimum line width which can be generated by the rasterizing process.

According to a second aspect of the preferred embodiments of the present invention, there is provided an image forming apparatus including an image processing apparatus which includes: an image generating section to generate an image having a gradation value for each pixel by a rasterizing process; and a position correcting section to correct a position of a certain region of the image on a pixel basis, wherein the image generating section generates the image including a line image by the rasterizing process, so that a line width of the line image is adjusted to be equal to or more than twice a minimum line width which can be generated by the rasterizing process.

According to a third aspect of the preferred embodiments of the present invention, there is provided a method for generating an image having a gradation value for each pixel by a rasterizing process, the method including: when a position of a certain region of the image is corrected on a pixel basis, generating the image including a line image by the rasterizing process, so that a line width of the line image is adjusted to be equal to or more than twice a minimum line width which can be generated by the rasterizing process.

According to a fourth aspect of the preferred embodiments of the present invention, there is provided a computer readable medium including an instruction to cause a computer to perform steps of a method for generating an image having a gradation value for each pixel by a rasterizing process, the method including: when a position of a certain region of the image is corrected on a pixel basis, generating the image including a line image by the rasterizing process, so that a line width of the line image is adjusted to be equal to or more than twice a minimum line width which can be generated by the rasterizing process.

### BRIEF DESCRIPTION OF THE DRAWINGS

The present invention will become more fully understood from the detailed description given hereinbelow and the appended drawings, and thus are not intended as a definition of the limits of the present invention, and wherein:
FIG. 1 is a functional block diagram illustrating a configuration of an image forming apparatus of this embodiment;
FIG. 2 is a functional block diagram illustrating a configuration of an image processing apparatus illustrated in FIG. 1;
FIG. 3 is a diagram illustrating an example of position correction by inserting pixels into an image;
FIG. 4 is a diagram illustrating an example of position correction by shifting certain regions of an image;
FIG. 5 is a diagram illustrating a line image which is broken due to shift of a certain region;
FIG. 6 is a diagram illustrating a line image which is broken due to insertion of pixels;
FIG. 7 is a diagram illustrating line images before and after shift of a certain region, each of the images having a line width equal to or more than twice the minimum line width;
FIG. 8 is a diagram illustrating line images before and after insertion of pixels, each of the images having a line width equal to or more than twice the minimum line width;
FIG. 9 is a diagram illustrating line images before and after shift of a certain region, each of the images having halftone values in the entire region thereof;
FIG. 10 a diagram illustrating line images before and after shift of a certain region, each of the images having halftone values in the partial regions thereof;
FIG. 11 is a diagram illustrating line images before and after shift of a certain region, each of the images having different halftone values according to a tilt angle thereof; and
FIG. 12 is a diagram illustrating line images created by a conventional method for preventing a line image from being broken.

### PREFERRED EMBODIMENT OF THE PRESENT INVENTION

Hereinafter, embodiments of an image processing apparatus, image forming apparatus, image generating method, and medium according to the present invention will be described with reference to the drawings.

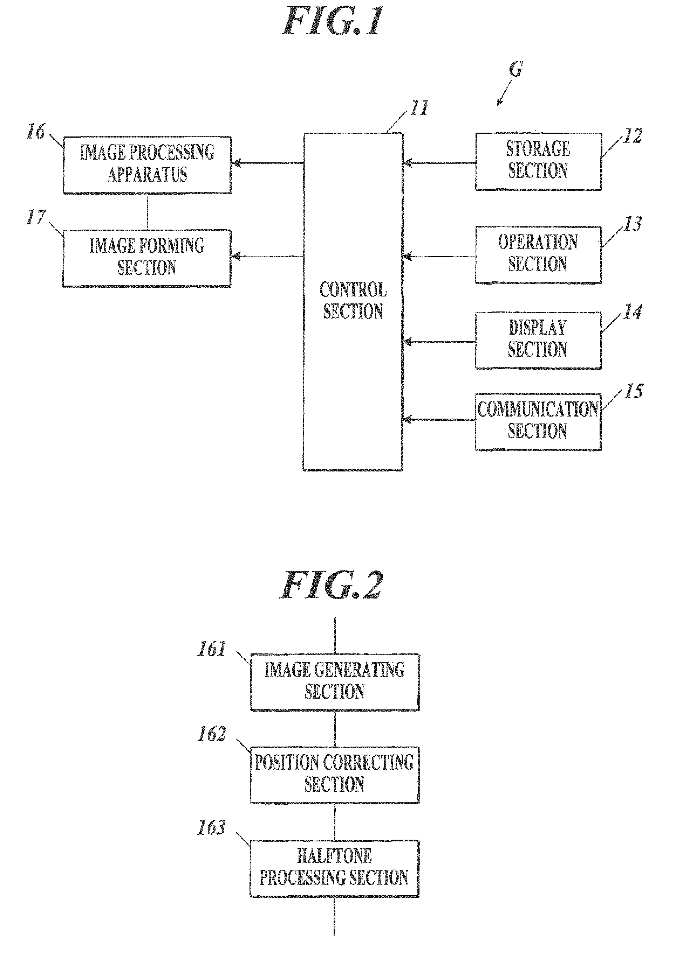

FIG. 1 is a functional block diagram which illustrates, by function, a configuration of an image forming apparatus G of this embodiment.

As illustrated in FIG. 1, the image forming apparatus G includes a control section 11, storage section 12, operation section 13, display section 14, communication section 15, image processing apparatus 16, and image forming section 17.

The control section 11 is equipped with a Central Processing Unit (CPU), Random Access Memory (RAM), etc. The control section 11 reads out programs stored in the storage section 12, and controls respective sections of the image forming apparatus G according to the programs.

For example, the control section 11 causes the image processing apparatus 16 to generate a bitmap image having gradation values for respective pixels, and causes the image forming section 17 to form images with toner on a sheet on the basis of the bitmap image.

The storage section 12 stores programs, files, etc. which are readable by the control section 11.

As the storage section 12, storage media such as a hard disk, Read Only Memory (ROM), etc. can be used.

The operation section 13 is equipped with operation keys, a touch panel integrally configured with the display section 14, etc., and outputs operation signals in response to operations in the operation section 13 to the control section 11. A user can perform input operations to execute job setting, change of processing contents, etc., in the operation section 13.

The display section 14 may be composed of a Liquid Crystal Display (LCD) or the like, and displays an operation screen and other screens according to instructions from the control section 11.

The communication section 15 communicates with computers on a network, such as a user terminal, server, and other image forming apparatuses according to instructions from the control section 11. For example, the communication section 15 receives Page Description Language (PDL) data transmitted from the user terminal.

As illustrated in FIG. 2, the image processing apparatus 16 includes an image generating section 161, position correcting section 162, and halftone processing section 163.

The image generating section 161 performs a rasterizing process to the PDL data received by the communication section 15 to generate bitmap images each having the gradation values for the respective pixels, for respective colors of Cyan (C), Magenta (M) and Yellow (Y).

Each of the gradation values is represented by a percentage (%) of a value ranging from 0 to 255, in the case of data of 8bits per pixel. For example, the gradation value of 128 is represented as 50% (50 = 128/256).

The position correcting section 162 corrects the position(s) of the certain region(s) of the image of each of colors C, M, Y and K input from the image generating section 161, on a pixel basis. When position correction is not necessary, the position correcting section 162 outputs the input image to the halftone processing section 163 without position correction.

The position correcting section 162 executes position correction by inserting/removing a pixel or pixels into/from the image, or position correction by shifting the certain region(s) of the image, depending on the type of positional deviation.

For example, with respect to positional deviation of the images formed on both sheet sides, the position correcting section 162 corrects the position(s) of the certain region(s) of the image by inserting or removing one(1) pixel into/from each certain region of the image so that the image is slightly enlarged or contracted.

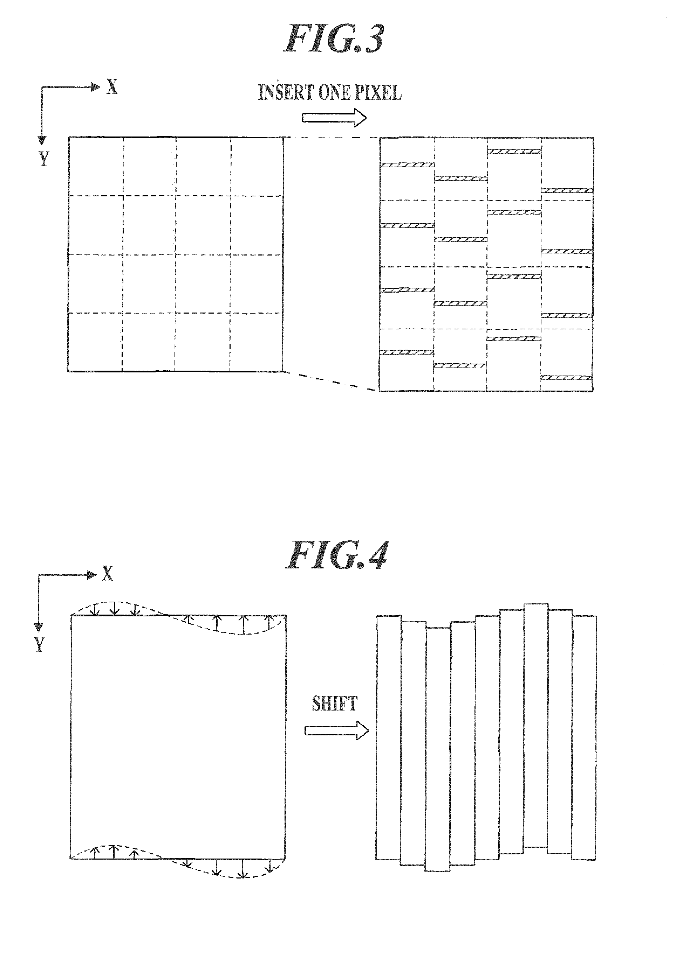

FIG. 3 illustrates the image in which one(1) pixel is inserted into each of certain regions so that the image is enlarged in a sub-scanning direction Y.

To suppress image quality from being deteriorated due to insertion or removal of pixel or pixels, the position correcting section 162 preferably inserts/removes the pixel into/from a position in each certain region, the position being different from those in other regions.

In FIG. 3, each of shaded portions in the respective certain regions represents a pixel insertion position which is different from those in other regions.

To further suppress image quality from being deteriorated, the position correcting section 162 may make each of the certain regions include pixel insertion positions which are different from one another depending on their positions in a main-scanning direction X, so that the pixel insertion positions disperse in each of the certain regions.

With respect to positional deviation due to tilt of the image, such as skew and bow, the position correcting section 162 shifts a certain region(s) of the image on a pixel basis so that a position(s) of the certain region(s) of the tilted image is corrected.

FIG. 4 illustrates an image which includes positional deviation due to bow as illustrated with dashed lines, and an image which is corrected by shifting certain regions thereof in a direction indicated by arrows.

The halftone processing section 163 performs a halftone process to the bitmap images of the respective colors C, M, Y and K input from the position correcting section 162. The images having been subjected to the halftone process are output to the image forming section 17.

The halftone process includes, for example, an error diffusion process, screen process using dither matrix, etc.

The image forming section 17 forms images with toner on the sheet, on the basis of the bitmap image of the respective colors C, M, Y and K input from the image processing apparatus 16.

Specifically, the image forming section 17 is equipped with an exposure section, photoreceptor, developing section, transfer body, fixing device, etc., for each of the colors C, M, Y and K.

The image forming section 17 causes the exposure sections to irradiate the charged photoreceptors with laser beam modulated depending on the gradation values of the respective pixels so that electrostatic latent images are formed on the photoreceptors. The image forming section 17 causes the developing section to supply toners of the respective colors onto the photoreceptors and to perform developing. The image forming section 17 transfers the images of the respective colors formed with toners on the photoreceptors onto the transfer body so that the images overlap, and the images are transferred to the sheet from the transfer body. The image forming section 17 causes the fixing device to perform a fixing process with pressurizing and heating.

Next, processing contents by the image processing apparatus 16 will be described.

In the image processing apparatus 16, when the position correcting section 162 corrects the position(s) of the certain region(s) of the image generated by the image generating section 161, sometimes the line image(s) contained in the image is broken and thereby reproducibility of the line image lowers. The smaller the line width is, the more the broken easily occurs. The more the gradation values of the line image are close to the maximum value, the more the broken is distinct.

When the position correction section 162 corrects the position of the certain region of the image on a pixel basis, the image processing apparatus 16 causes the image generating section 161 to generate the line image contained in the image generated in the rasterizing process so that the line image has the line width equal to or more than twice the minimum line width that can be generated by the rasterizing process, in order to improve reproducibility of the line image.

The position of the certain region of the image generated by the rasterizing process is corrected by the position correcting section 162 without resolution conversion. Thus, the resolution of the image generated by the rasterizing process is same as the resolution of the image subjected to correction by the position correcting section 162.

For example, when generating the line image having the resolution of 600 dot per inch (dpi), the minimum line width that the image generating section 161 can generate is 42 µm, which is same as the size of one(1) pixel in the resolution of 600 dpi. The image generating section 161 thus generates the line image so that it has at least the line width of 84 µm, which is twice the minimum line width.

The image generating section 161 may adjust the line width of the line image by rewriting the line width to that equal to or more than twice the minimum line width, in vactor-format PDL data, a display list obtained by analyzing the PDL data, or the like.

The image generating section 161 may also adjust the line width of the line image by determining the gradation values of the respective pixels, on the basis of the display list, so that the line image has the line width twice the minimum line width.

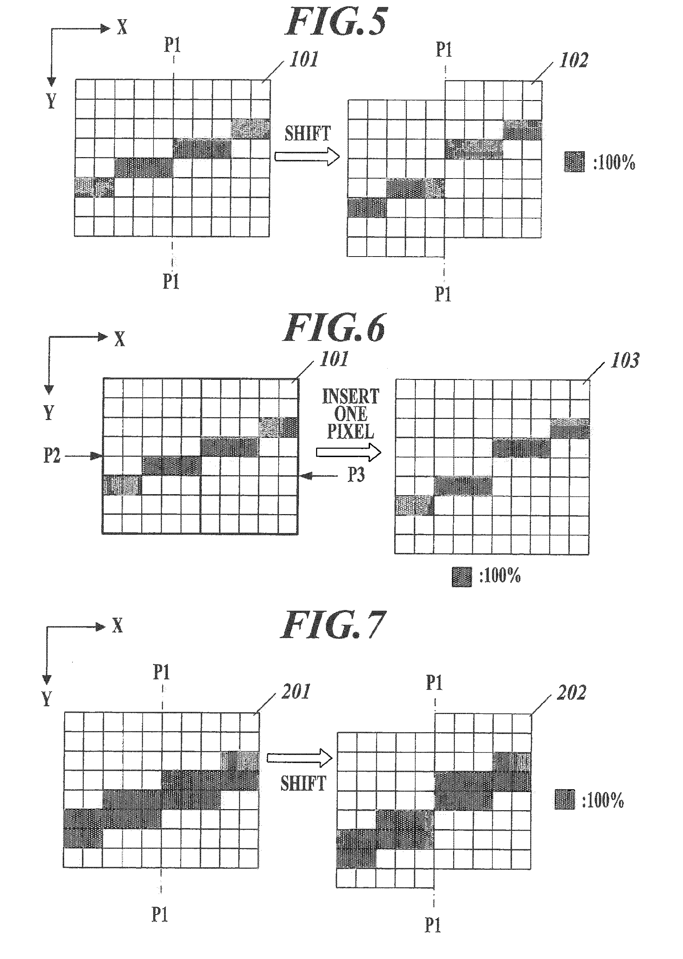

FIG. 5 illustrated a line image 101 generated so as to have a line width of 42 µm, which is generated by drawing a slant line having a tilt angle of 30 degrees with respect to the main-scanning direction X, with resolution of 600 dpi. The line image 101 has the line width corresponding to a width of one(1) pixel, and has the gradation values of 100%, which is the maximum values.

When position correction is performed to the line image 101 so that the certain region bordered by Line P1-P1 is shifted by one(1) pixel in the sub-scanning direction, the line image 102 is obtained. The line image 102 is broken and its line shape is not maintained, as illustrated in FIG. 5.

Also in the case of position correction by inserting/removing the pixel(s) according to the conventional rasterizing process, the line image would be broken.

For example, as illustrated in FIG. 6, the line image 103 is obtained by inserting one(1) pixel into each of certain regions of 5 by 8 pixels, at each of Position P2 and Position P3, in the line image 101 so that the line image 101 is enlarged in the sub-scanning direction Y. The line image 103 is broken due to insertion of the pixels, and its line shape is not maintained.

On the other hand, FIG. 7 illustrates the line image 201 generated by the image generating section 161 by the rasterizing process performed to the PDL data same as the line image 101, so that the line image 201 has the line width twice the minimum line width.

As illustrated in FIG. 7, the line image 201 has the line width corresponding to a width of two pixels, which is twice the line width of the line image 101.

The line image 202 can be obtained by shifting the certain region bordered by Line P1-P1 of the line image 201 in the sub-scanning direction Y, by one(1) pixel. The line image 202 includes no broken.

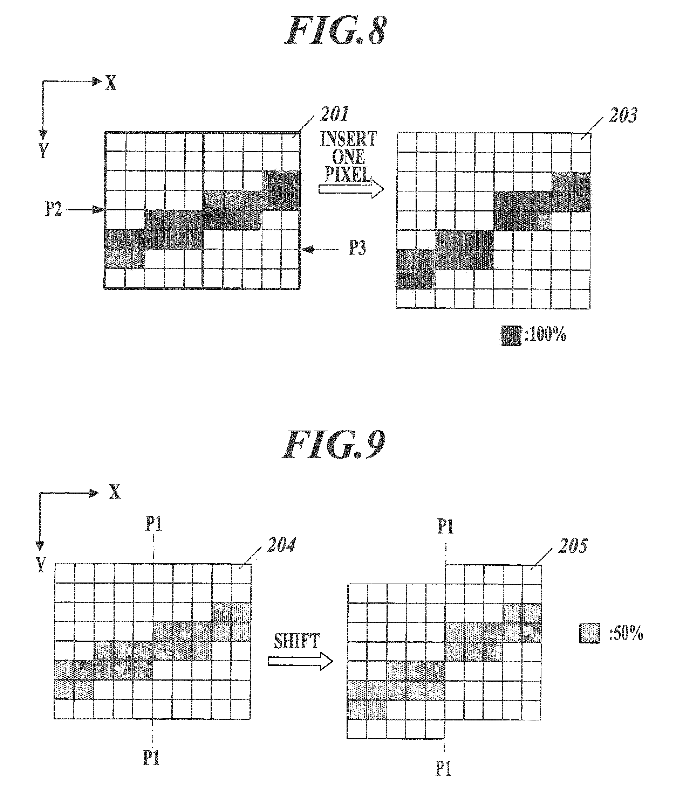

As illustrated in FIG. 8, the line image 203 is obtained by position correction of the line image 201 by inserting one(1) pixel into each of certain regions, at each of Position P2 and Position P3. Also the line image 203 includes no broken.

Thus, according to the rasterizing process by the image generating section 161, the line image including no broken due to position correction can be generated. Such line images have higher reproducibility, compared with the line image 101 which is broken and whose line shape is not maintained.

Incidentally, when the position correcting section 162 does not perform position correction, the broken due to the position correction does not occur. Thus, the image generating section 161 can generate the line image 101 by the method like the conventional rasterizing process. By this, the line image same as the original line image can be generated, and reproducibility of the line image can be improved.

The image generating section 161 can set the gradation values of the line image, which is generated so as to have the line width equal to or more than twice the minimum line width, to the original gradation values of the line image before adjustment of the line width, or set a part or all of the gradation values of the line image to the halftone values. Each of the halftone values is an intermediate gradation value ranging between the minimum value, 0%, and the maximum value, 100%.

By using the halftone values, not only the line shape but also the density of the line image can be maintained, and thereby reproducibility of the line image is improved. Moreover, edges of the line image can be smoothly reproduced with the halftone values, and thereby similar effects to that by smoothing process can be obtained. The smoothing process means a process to adjust the gradation values so that they gradually change from the edges to the background of the image, in order to reduce jaggies occurring in the edges of the image such as a line and character. The smoothing process is also referred to as anti-aliasing.

In the case of using the halftone values in the line image, the image generating section 161 preferably adjusts the halftone value(s) so that a sum of at least one halftone value in a line width direction of the line image matches a sum of at least one halftone value in a line width direction of the original line image before adjustment of the line width.

By this, even when the line width of the generated image becomes equal to or more than twice the line width of the original line image, the same density as that of the original line image can be reproduced, which improves reproducibility of the line image.

For example, the image generating section 161 may perform the rasterizing process to the PDL data same as the line image 101 to generate the line image 204 having a two-pixel width, which is twice the minimum line width, as illustrated in FIG. 9, and may set all the gradation values of the line image 204 to the halftone values of 50%.

As illustrated in FIG. 9, even when the certain region bordered by Line P1-P1 of the line image 204 is shifted, the obtained line 205 includes no broken. Moreover, the sum of the gradation values in the line width direction of the line image 204 is 100%, which matches the sum of the gradation value in the line width direction of the line image 101 having the original line width. Thus, not only the line shape but also the density are maintained, and reproducibility of the line image is improved.

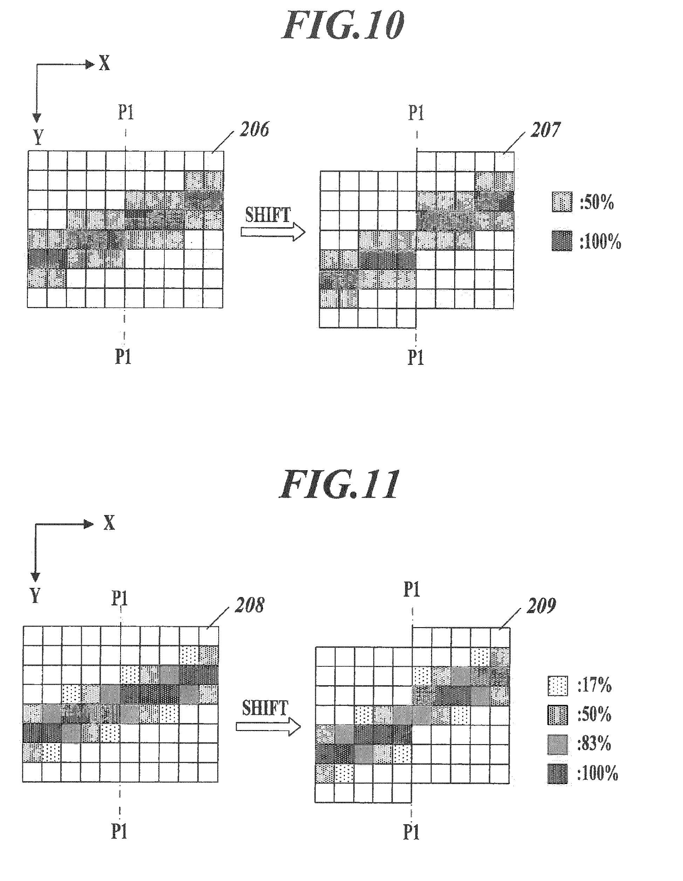

The image generating section 161 may also execute the rasterizing process to the PDL data same as the above line image 101 to generate the line image 206 having three-pixel width, which is three times as large as the minimum line width, as illustrated in FIG. 10. The image generating section 161 may set the gradation values of edges, which are parts of the line image 206, to the halftone values of 50%.

As illustrated in FIG. 10, because the line image 206 has the line width three times as large as the minimum line width, connection of straight-line portion is retained and the line shape is sufficiently maintained in the line image 207, which is obtained by shifting the certain region of the line image 206, the region being bordered by Line P1-P1. Compared with the line image 201 illustrated in FIG. 7, the line image 206 has the wider line width. Meanwhile, the sum of the halftone values in the line width direction of the line image 206 is 200%, which is same as the sum of the halftone values in the line width direction of the line image 201. Thus, the density reproduced in the line image 206 is not different from that in the line image 201.

The image generating section 161 may also make the halftone values of a part(s) of the line image different from the halftone values of other parts, depending on the tilt angle of the line image.

By this, the edges of the line image can be smoothly reproduced, like in the case of the smoothing process.

For example, the image generating section 161 generates the line image 208 having the line width three times as large as the minimum line width from the PDL data same as the above line image 101, as illustrated in FIG. 11, and sets the gradation values of edges of the line image 208 to the halftone values. The tilt angle of the line image 208 is 30 degrees. When pixels are allocated to the slant line whose tilt angle is 30 degrees, a ratio of an area that the edges of the slant line occupy to an area of each pixel becomes 1/6, 3/6 or 5/6. The image generating section 16 thus sets the halftone values of the edges to different values of 17% (17% ≈ 100% x 1/6), 50% (50% ≈ 100% x 3/6) and 83% (83% ≈ 100% x 5/6), respectively, so that the halftone values vary along the main-scanning direction, depending on the tilt angle of 30 degrees.

Even when the certain region bordered by Line P1-P1 of the line image 208 is shifted, the obtained line image 209 retains the connection of the straight-line portion, and the line shape is sufficiently maintained. Moreover, the edges of the line image are smoothly reproduced.

The image generating section 161 may set the target line image, which is to be generated to have the line width equal to or more than twice the above minimum line width, to the line image having the maximum gradation values.

This can improve reproducibility of the line image in which the broken tends to be conspicuous because of having the maximum gradation values.

Heretofore, it has been necessary to improve the resolution of the line image for preventing the line image from being broken due to position correction.

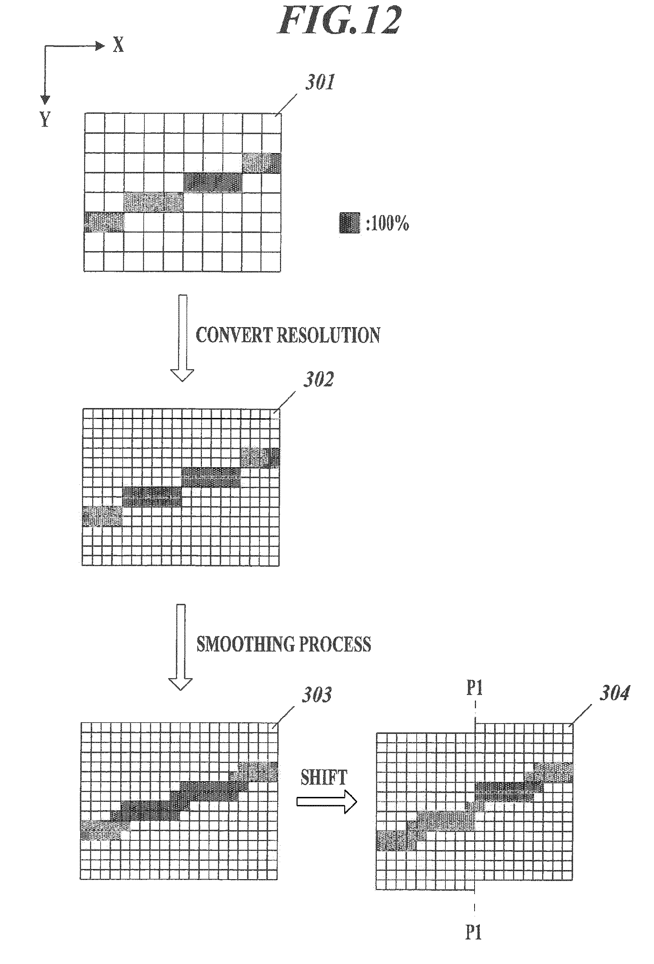

FIG. 12 illustrates images generated by the conventional method for preventing the broken.

As illustrated in FIG. 12, the conventional method generates the line image 301 having one(1) pixel width with resolution of 600 dpi by the rasterizing process, and converts the resolution of the line image 301 into the resolution of 2400 dpi, which is four times as large as the original resolution, to obtain the line image 302. Because the broken occurs due to position correction in this state, the smoothing process is further performed to acquire the line image 303 based on the line image 302.

The straight line portion of the line image 303 has the same line width as that of the line image 301. After the smoothing process, the line width of the connection part of the straight-line portions becomes thicker. With improvement of the resolution, a shift amount due to position correction becomes small, namely, one-half of a shift amount in the case of 600 dpi. Thus, the line image 304 including no broken is obtained after position correction is executed to the line image 303 by shifting the certain region bordered by Line P1-P1, in the sub-scanning direction, by one(1) pixel.

However, according to the conventional method, the data quantity of the acquired line image 303 becomes four times as large as that of the line image 301. Moreover, the resolution conversion and the smoothing process are necessary for acquiring the line image 303, which increase processing steps. Furthermore, large-capacity memory resources, operation resources, etc. become necessary, and accordingly the costs increase.

On the other hand, the image generating section 161 of this embodiment can prevent the image from being broken without improvement of the resolution, which can maintain the line shape, and can improve reproducibility of the line image.

As described above, the image processing apparatus 16 of this embodiment includes the image generating section 161 which generates the image having the gradation values for the respective pixels by the rasterizing process, and the position correcting section 162 which corrects the position(s) of the certain region(s) of the image on a pixel basis. The image generating section 161 makes the line image, which is contained in the image generated by the rasterizing process, have the line width equal to or more than twice the minimum line width that can be generated by the rasterizing process.

This enables generation of the line image which is not broken even when position correction is performed. The line image can be prevented from being broken without executing resolution conversion, the smoothing process, etc. Thus reproducibility of the line image can be easily improved.

The above embodiments are preferred examples of the present invention, and the present invention is not limited thereto. These embodiments can be arbitrary changed without departing from the spirit of the present invention.

For example, it is possible to allow a user to select whether or not the image generating section 161 generates the line image so that it has the line width equal to or more than twice the minimum line width.

At that time, the display section 13 may issue a warning to a user by displaying a message to notify him/her that reproducibility of the line image would lower due to position correction by the position correcting section 162. In a similar way, the display section 13 may advise a user to select a mode of generating the line image having the line width equal to or more than twice the minimum line width.

Moreover, not only the image forming apparatus G but also an information processing apparatus such as a PC and server can be equipped with the above image processing apparatus 16, as long as it generates the image by the rasterizing process and corrects the position(s) of the certain region(s) of the image.

Furthermore, the control section 11 may read the programs for causing the control section 11 to execute the above processing procedures by the image generating section 161 to implement the processing contents same as those by the image generating section 161. As a computer-readable medium for the programs, a non-volatile memory such as a ROM and flash memory, or a portable recording medium such as a CD-ROM can be adopted. Also carrier wave can be adopted as a medium which provides data of the programs via a communication line.

## Claims

1. An image processing apparatus comprising:
an image generating section to generate an image having a gradation value for each pixel by a rasterizing process; and
a position correcting section to correct a position of a certain region of the image on a pixel basis,
wherein the image generating section generates the image including a line image by the rasterizing process, so that a line width of the line image is adjusted to be equal to or more than twice a minimum line width which can be generated by the rasterizing process.

2. The image processing apparatus of claim 1, wherein a resolution of the image generated by the rasterizing process is same as a resolution of the image subjected to correction by the position correcting section.

3. The image processing apparatus of claim 1 or 2, wherein the image generating section sets at least one gradation value of the line image having the line width equal to or more than twice the minimum line width to at least one gradation value of the line image before adjustment of the line width.

4. The image processing apparatus of claim 1 or 2,
wherein the image generating section sets a part or all of at least one gradation value of the line image having the line width equal to or more than twice the minimum line width to at least one halftone value.

5. The image processing apparatus of claim 4, wherein the image generating section adjusts the at least one halftone value so that a sum of the at least one halftone value in a line width direction of the line image matches a sum of at least one gradation value in a line width direction of the line image before adjustment of the line width.

6. The image processing apparatus of claim 4, wherein the image generating section varies the at least one halftone value depending on a tilt angle of the line image.

7. The image processing apparatus of any one of claims 1 to 6, wherein the image generating section sets a target line image, which is generated so as to have the line width equal to or more than twice the minimum line width, to a line image having a maximum gradation value.

8. An image forming apparatus comprising an image processing apparatus which includes:
an image generating section to generate an image having a gradation value for each pixel by a rasterizing process; and
a position correcting section to correct a position of a certain region of the image on a pixel basis,
wherein the image generating section generates the image including a line image by the rasterizing process, so that a line width of the line image is adjusted to be equal to or more than twice a minimum line width which can be generated by the rasterizing process.

9. A method for generating an image having a gradation value for each pixel by a rasterizing process, the method comprising:
when a position of a certain region of the image is corrected on a pixel basis, generating the image including a line image by the rasterizing process, so that a line width of the line image is adjusted to be equal to or more than twice a minimum line width which can be generated by the rasterizing process.

10. The method of claim 9, wherein a resolution of the image generated by the rasterizing process is same as a resolution of the image when the position of the certain region of the image is corrected on a pixel basis.

11. The method of claim 9 or 10, wherein in the generating step, at least one gradation value of the line image having the line width equal to or more than twice the minimum line width is set to at least one gradation value of the line image before adjustment of the line width.

12. The method of claim 9 or 10, wherein in the generating step,
a part or all of at least one gradation value of the line image having the line width equal to or more than twice the minimum line width is set to at least one halftone value.

13. The method of claim 12, wherein in the generating step, the at least one halftone value is adjusted so that a sum of the at least one halftone value in a line width direction of the line image matches a sum of at least one gradation value in a line width direction of the line image before adjustment of the line width.

14. The method of claim 12, wherein in the generating step, the at least one halftone value varies depending on a tilt angle of the line image.

15. The method of any one of claims 9 to 14, wherein in the generating step, a target line image, which is generated so as to have a line width equal to or more than twice the minimum line width, is set to a line image having a maximum gradation value.

16. A computer readable medium including an instruction to cause a computer to perform steps of a method for generating an image having a gradation value for each pixel by a rasterizing process, the method comprising:
when a position of a certain region of the image is corrected on a pixel basis, generating the image including a line image by the rasterizing process, so that a line width of the line image is adjusted to be equal to or more than twice a minimum line width which can be generated by the rasterizing process.

17. The computer readable medium of claim 16, wherein a resolution of the image generated by the rasterizing process is same as a resolution of the image when the position of the certain region of the image is corrected on a pixel basis.

18. The computer readable medium of claim 16 or 17, wherein in the generating step, at least one gradation value of the line image having the line width equal to or more than twice the minimum line width is set to at least one gradation value of the line image before adjustment of the line width.

19. The computer readable medium of claim 16 or 17,
wherein in the generating step, a part or all of at least one gradation value of the line image having the line width equal to or more than twice the minimum line width is set to at least one halftone value.

20. The computer readable medium of claim 19, wherein in the generating step, the at least one halftone value is adjusted so that a sum of the at least one halftone value in a line width direction of the line image matches a sum of at least one gradation value in a line width direction of the line image before adjustment of the line width.

21. The computer readable medium of claim 19, wherein in the generating step, the at least one halftone value varies depending on a tilt angle of the line image.

22. The computer readable medium of any one of claims 16 to 21, wherein in the generating step, a target line image, which is generated so as to have a line width equal to or more than twice the minimum line width, is set to a line image having a maximum gradation value.
